# EUROPEAN PATENT APPLICATION

(11) **EP 1 473 220 A1**
(43) Date of publication of application: **03.11.2004**
(21) Application number: 03425279.1
(22) Date of filing: 30.04.2003
(51) Int. Cl.: B62M 25/04, B62K 23/04

(54) **Control device for a bicycle derailleur**

(71) Applicant: Campagnolo Srl, 36100 Vicenza (VI) (IT)
(72) Inventor: Dal Pra', Giuseppe, 36010 Zané (Vicenza) (IT)
(74) Representative: Checcacci, Giorgio

(57) **Abstract**

A control device (1) for a bicycle derailleur comprises a supporting body (4), which can be fixed to the handlebar (3) and which can be gripped by the cyclist and which has an internal side wall (4a) and an external side wall (4b), which are substantially parallel to the plane of a respective curved end of the handlebar. The device moreover comprises actuator means for actuating the derailleur towards higher or lower gear ratios, controlled by means of a first and a second control member (8, 9; 16, 17; 18, 19). The two control members are both arranged on the internal side wall (4a) of the supporting body (4), in a position that can be reached by the cyclist's thumb when his hand is in its normal operating position.

## Description

The present invention relates to control devices for bicycle derailleurs. The invention relates to bicycles, in particular competition bicycles, of the type comprising a frame and an handlebar presenting a central part connected to the bicycle frame and two curved ends which extend substantially in planes perpendicular to the central part of the handlebar.

There are by now universally asserted in the field of competition bicycles, control devices that integrate the control of a derailleur and the control of a brake of the bicycle in a single supporting body, which can be fixed to the handlebar of the bicycle and which can be gripped by the cyclist. The mechanism of actuation of the derailleur is controlled generally by two levers associated to the control device.

According to a first known technique, a first control lever extends along and behind the brake lever and can be actuated in a direction transverse to the movement direction of the brake lever for controlling the derailleur in a first operating direction. A second control lever projects from the internal side wall of the supporting body and can be actuated in a substantially vertical direction for controlling the derailleur in the opposite operating direction.

According to another known technique, the first control lever coincides with the brake lever, which can be actuated in this case according to two directions transverse to one another, one direction for bringing about braking and the other for controlling the derailleur in a first operating direction. A second control lever extends behind the brake lever, for controlling the derailleur in the opposite operating direction. In the known devices above mentioned the control lever of the derailleur, whether this is set behind the brake lever or it is coincident with the brake lever, is controlled typically with one or more of the cyclist's fingers by pushing it in a transverse direction from the outside towards the inside of the handlebar. The lever projecting from an internal side wall of the supporting body is, instead, controlled typically with the cyclist's thumb. Both of the levers are normally recalled by elastic means into their neutral starting position after each actuation.

In addition, in the most classic configuration, the control device mounted on the right end of the handlebar controls the rear derailleur and the rear brake, whilst the left control device controls the front derailleur and the front brake.

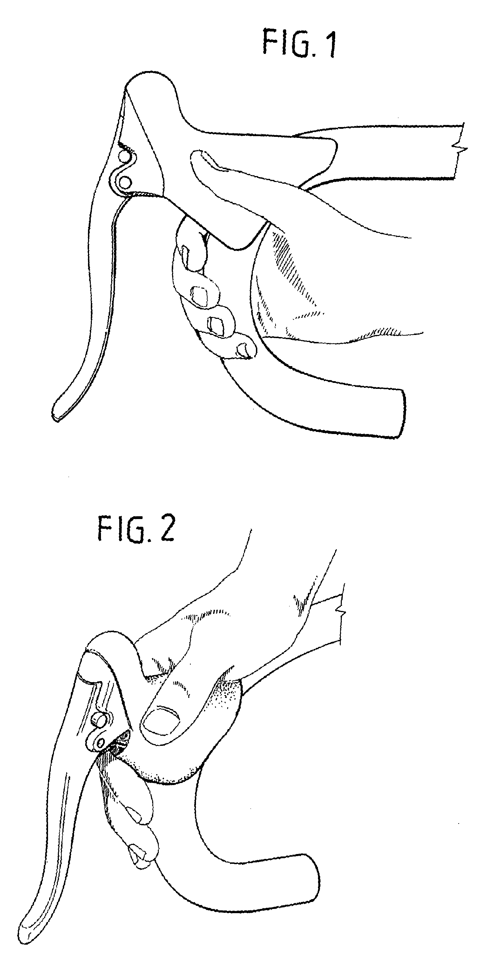

The spread of integrated control devices of the type above described has in practice led cyclists to use the supporting bodies of the two integrated brake-derailleur controls mounted on the two ends of the handlebar as true appendages of the handlebar. It follows therefrom that, when the cyclist is riding the bicycle, according to his different posture and style and according to where he is travelling, the cyclist may grip the handlebar at its curved ends, as represented in Figure 1, or else grip the supporting body of the integrated controls directly, as represented in Figure 2, and it is evident that the controls must be able to be actuated by the cyclist whichever type of grip he is adopting.

With both the above mentioned types of grip the control devices of a known type present certain drawbacks.

A drawback associated to the first type of grip is represented by the fact that the cyclist is forced to loosen his grip on the handlebar in order to apply thrust, with one or more fingers, on the lever associated to the derailleur, whether this coincides with the brake lever or is set behind it. This involves a reduction in the pressure of his hand on the handlebar and the consequent loosening of his grip, with possible inconvenience for the cyclist, especially on rough paths.

Another drawback is represented by the fact that the gear-shifting operation, both when shifting upwards and when shifting downwards, may result inconvenient for a cyclist with small hands on account of the difficulty in reaching the actuation levers, this fact forcing him to displace his hand from the optimal gripping position.

A drawback associated to the second type of grip is represented by the fact that the cyclist, in order to apply thrust, with one or more fingers, on the lever associated to the derailleur, whether this coincides with the brake lever or is set behind it, is forced to loosen his grip on the supporting body of the control device.

A first aspect of the invention lies in the perception of said drawbacks and in the perception that they can be overcome by adopting a control device for a derailleur of a bicycle comprising a frame and an handlebar, the handlebar presenting a central part, connected to the frame, and two curved ends, which extend in planes that are substantially perpendicular to the central part of the handlebar, said device comprising:
- a supporting body, which can be fixed to said handlebar and which can be gripped by the cyclist and has an internal side wall and an external side wall that are substantially parallel to the plane of a respective curved end of the handlebar;
- actuator means for actuating said derailleur which can be controlled in two opposite directions, respectively for controlling the derailleur either in the direction of higher gear ratios or in the direction of lower gear ratios; and
- a first and a second control member, for activating said actuator means in said two opposite directions,
the control device being characterized in that said first and second control members are both arranged on said internal side wall of said supporting body, in a position that can be reached by the cyclist's thumb when the cyclist's hand is in its normal operating position.

A further aspect of the invention is to realize a control device for a bicycle derailleur which can be easily actuated by the cyclist's thumb without the cyclist having to displace his hand, whichever type of grip he is adopting.

In accordance with what has been said, the expression "normal operating position of the cyclist's hand" is to be meant the position of the cyclist's hand in the proximity of the device, whichever type of grip he is adopting.

According to a first embodiment, the gear-shifting operations are performed by acting on said control members, made in the form of actuating keys projecting from the internal side wall of the supporting body, which are positioned at the ends of respective actuating arms. Said actuating arms may be mounted so that they can slide with respect to the wall, or else so that they can oscillate around respective axes distinct from one another, or else again around a single common axis.

In other embodiments, the control members are preferably constituted by actuating push-buttons projecting from the internal wall of the support and appropriately oriented so as to be actuated by the cyclist's thumb, by means of its displacement according to preferred directions orthogonal or parallel with respect to the wall.

The control members in any embodiment can be associated to actuator means for actuating the derailleur both of an electrical type and of a mechanical type. In the first case the control members act advantageously on electrical switches, whilst in the second case the control members co-operate mechanically with appropriate actuator mechanisms carried by the supporting body.

Advantageously, the device according to the invention enables the cyclist to control the derailleur easily in its two opposite directions, intervening whenever necessary with his thumb on the respective control member, at the same time keeping his hand substantially in the same operating position, with consequent facilitation of the task of controlling the bicycle by the cyclist.

Further characteristics and advantages of the invention will result from the following description with reference to the annexed drawings, which are provided purely by way of non-limiting example and in which:
- Figures 1 and 2 are perspective views of two types of grip of the cyclist's hand when he is riding the bicycle;
- Figure 3 is a perspective view of a first embodiment of the control device according to the invention;
- Figure 4 illustrates the device of Figure 3 gripped by the hand of the cyclist;
- Figure 5 is a perspective view of a variant of the device of Figure 3;
- Figure 6 is a side view of a second embodiment of the control device according to the invention;
- Figure 7 is a front view, partially sectioned according to the line VII-VII, of the device of Figure 6;
- Figure 8 is a side view of a third embodiment of the control device according to the invention;
- Figure 9 is a front view of the device of Figure 8, with a detail sectioned according to the line IX-IX of Figure 8;
- Figures 10 and 11 are a plan view and a side view, respectively, of a further embodiment of the device according to the invention;
- Figure 12 illustrates a front view of another variant of the invention;
- Figure 12A illustrates at an enlarged scale a detail of Figure 12;
- Figure 13 is a side view of the device of Figure 12 applied to an handlebar gripped by the cyclist;
- Figures 14 and 15 are a side view and a front view, respectively, of a further variant of the invention;
- Figure 14A illustrates a detail in a cross-sectional view corresponding to the line XV-XV of a variant of Figure 14;
- Figure 16 is a side view of a further variant; and
- Figure 17 is a front view of the device of Figure 16, with a detail sectioned according to the line XVII-XVII.

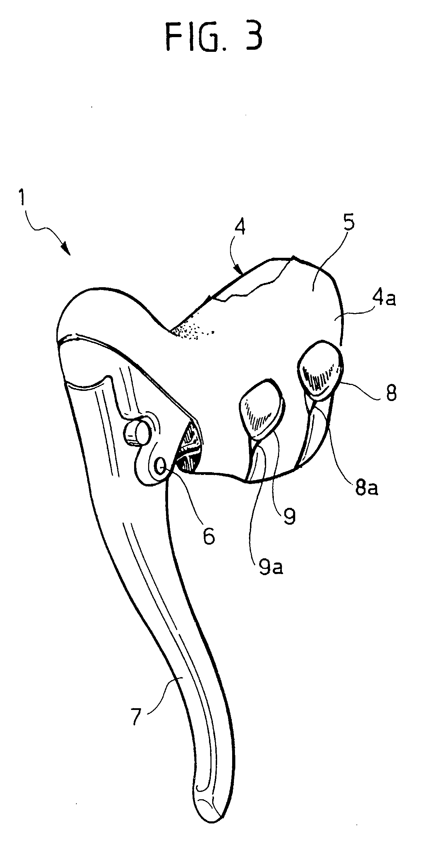

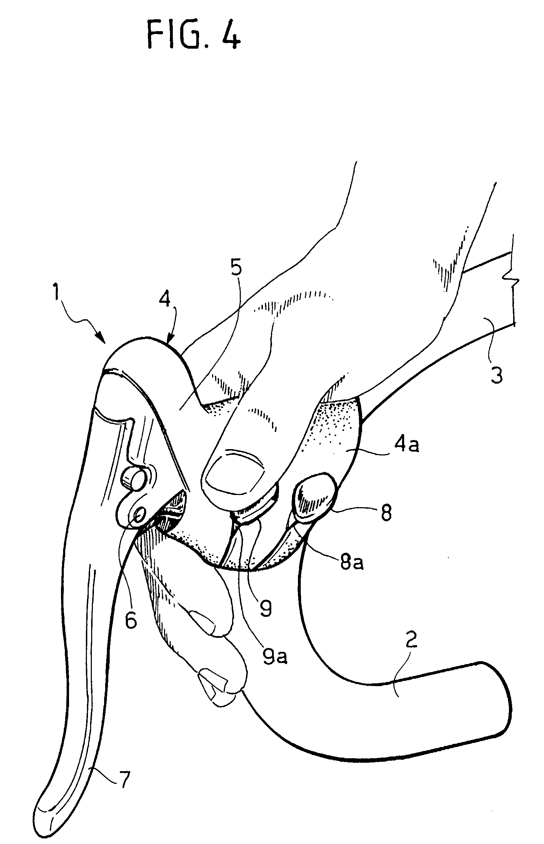

In Figure 3, the reference number 1 designates as a whole a right-hand control device designed to be mounted on the curved end 2 (see Figure 4) of an handlebar 3 of a competition bicycle. The device comprises a supporting body 4, in the form of a hollow metal body, designed to be covered with a protective sheath 5 made of elastomeric material. Articulated to the supporting body 4 by means of an articulation pin 6 there is a brake lever 7 designed to actuate a bicycle brake by means of a flexible control cable (not shown). The supporting body 4 functions also as a shell or casing for a mechanism (not shown either in Figure 1) for actuation of a bicycle derailleur. In the case of a right-hand control, usually the mechanism controls operation of the rear bicycle derailleur, whilst the operation of the front derailleur is controlled by a similar left-hand control set at the left end of the handlebar of the bicycle.

The actuation mechanism of the derailleur is controlled by two keys 8, 9 projecting from the side wall 4a set on the inner side of the supporting body 4, i.e., facing the central median plane of the handlebar. The two keys 8, 9 constitute the ends of respective actuating arms 8a, 9a.

As it may be seen in Figure 4, the position of the two keys 8, 9 is chosen in such a way as to enable the cyclist to actuate them without modifying the position of his hand on the supporting body 4, which consequently functions also as appendage of the handlebar, and moreover easily reach and actuate the brake lever 7. In particular, the position of the two keys 8, 9 is such that they are both controllable by the cyclist's thumb. Likewise, the cyclist may actuate each key 8, 9 with his thumb when he grips the handlebar, as illustrated in Figure 1. The solution represents, therefore, a substantial change as compared to the known devices, which at the most foresee a single control lever for the derailleur on the internal side wall 4a of the supporting body 4.

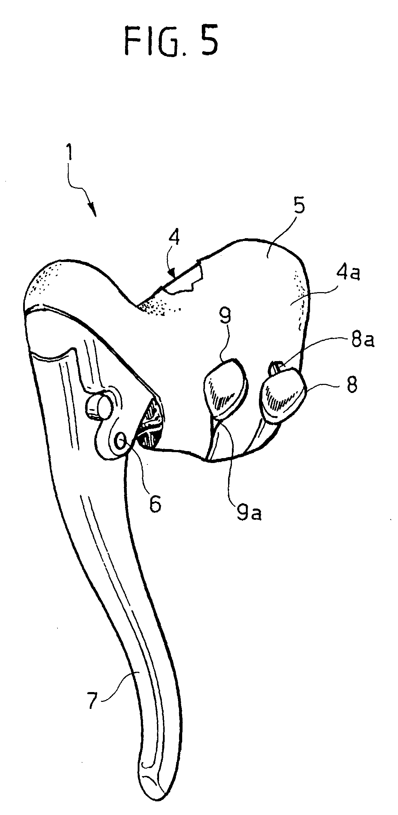

Figure 5 illustrates a variant of the device of Figure 3 and differs from the latter only as regards the different position of the key 8, which in this case is in a position slightly lowered with respect to the key 9.

It should be considered, with reference to the embodiments of Figures 3-5, that the actuating arms 8a, 9a and the respective keys 8, 9 can be arranged for displacement in a substantially vertical direction, or else in a direction inclined with respect to said vertical direction. In addition, the movement of the actuating arms 8a, 9a may correspond to an oscillation around an axis of oscillation, or else may consist of a linear translation.

It should moreover be noted that advantageously associated to the actuating arms 8a, 9a are also elastic means (not illustrated) that bring back each arm into a neutral position after its actuation. In the case illustrated, each actuating arm 8a, 9a is displaced downwards starting from its resting position illustrated here and returns automatically upwards following upon each actuation.

The solution described above, and the solutions that will be described in what follows can be associated irrespectively to actuator means of an electrical type or of a mechanical type for derailleurs with electrical or mechanical actuation.

In the case of actuators of a mechanical type, each actuating arm 8a, 9a, through respective ratchet-mechanism means, is able to control the rotation of a pulley for winding the flexible control cable of the derailleur, respectively, in the winding direction or in the unwinding direction. If so desired, one of the two arms may be for "release", i.e., designed to cause rotation of the pulley in the unwinding direction of the cable by simply leaving it temporarily free to rotate under the action of recall exerted, through the cable, by the elastic means associated to the rear derailleur.

In the case of application to actuators of an electrical type, each actuating arm 8a, 9a acts, with the end opposite to the one in which the push-buttons 8, 9 are present, on purposely provided electrical switches carried by the supporting body 4, which actuate, in a known way, the electric motor associated to the derailleur.

As regards the solutions represented in what follows, reference will be made for simplicity of representation to this second type of embodiment, but it is evident that they may equally be applied in an obvious way to an actuation of a mechanical type.

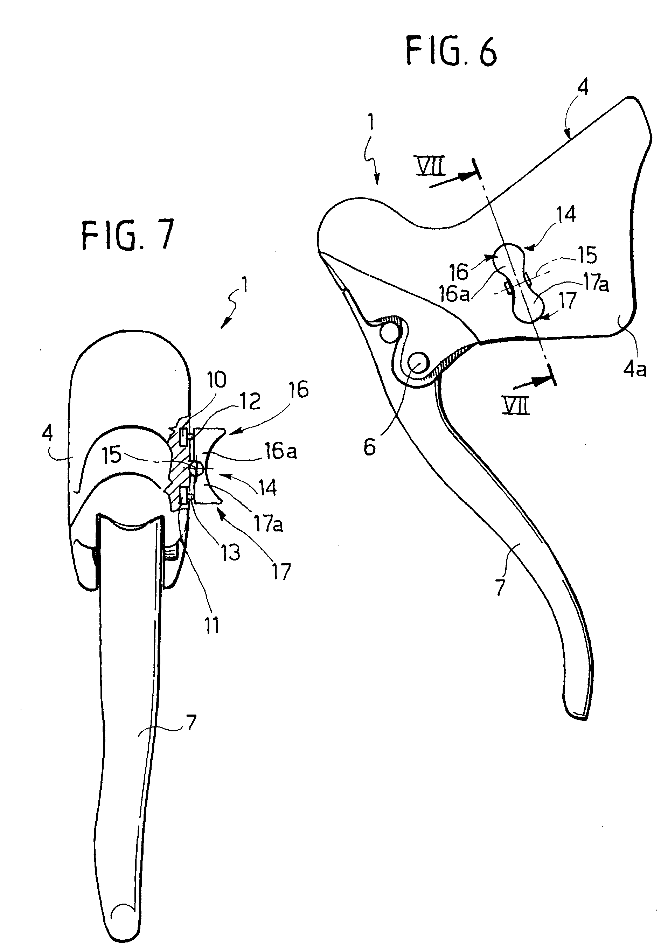

Figures 6 and 7 illustrate a second embodiment of the control device of the invention, in which the derailleur is actuated, as it has been said, by actuator means of an electrical type. In this case, the derailleur is provided with an electric actuating motor. In the case, for instance, of a rear derailleur, the electric motor controls the geometry of an articulated parallelogram forming part of the derailleur itself, by means of an external-thread/internal-thread system, as illustrated in US 5479776. The electric motor is controlled for gear-shifting either towards higher ratios or towards lower ratios by means of two respective electrical switches 10, 11 incorporated in the supporting body 4 of the device. The two electrical switches 10, 11 each present a mobile element 12, 13, respectively, that is recalled by elastic means (not illustrated) into a position where it is extracted and where it can be actuated, against the action of said elastic means, by a single body 14 rocking around an axis 15. The body 14 is defined by the two actuating arms 16a, 17a, the ends of which constitute the actuating keys 16, 17 controllable by the cyclist's thumb without the cyclist having substantially to displace his hand from the normal operating position. As it may be seen, in the case of the above solution, the axis 15 is parallel to the internal side wall 4a of the supporting body 4 and is substantially parallel to the longitudinal direction of the bicycle (with reference to the mounted condition of the device).

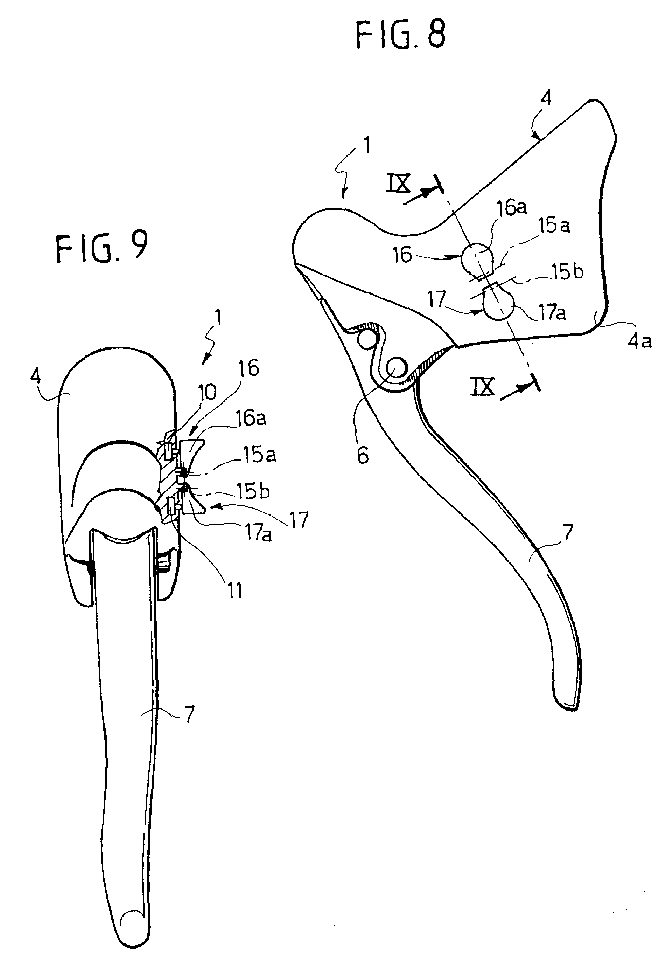

Figures 8 and 9 represent the device of the invention and differ from the one represented in Figures 6 and 7 since the actuating arms 16a, 17a and the respective keys 16, 17 constitute separate bodies which oscillate around two parallel and distinct axes 15a, 15b. In such an embodiment as in the one illustrated in Figures 6 and 7, the actuating keys 16, 17 may be conveniently controlled by the cyclist's thumb without the cyclist having to displace his hand substantially from the normal operating position. The solution with distinct axes enables in different variants adaptation of the position and orientation of the keys 16, 17 according to different configurations, for example with a reciprocally skew direction, according to the requirements or needs of the cyclist.

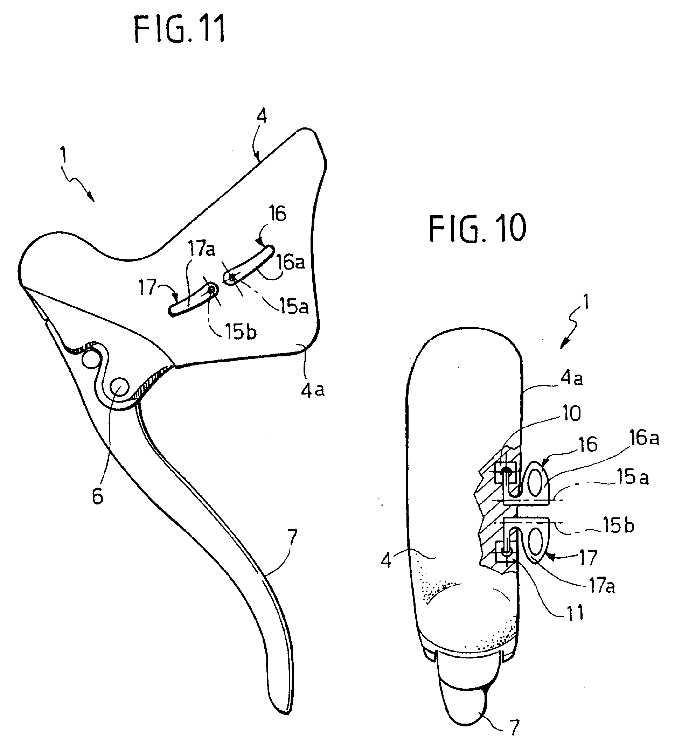

Also the embodiment illustrated in Figures 10 and 11 envisages two separate actuating arms 16a, 17a for the actuation of the two switches 10, 11 and presents oscillation axes 15a, 15b perpendicular to the internal side wall 4a. The keys 16, 17 are actuated, respectively, with a clockwise and counterclockwise movement around the axes 15a, 15b according to the view of Figure 11 and are easily controllable by the cyclist's thumb without the cyclist having to displace his hand substantially from its normal operating position.

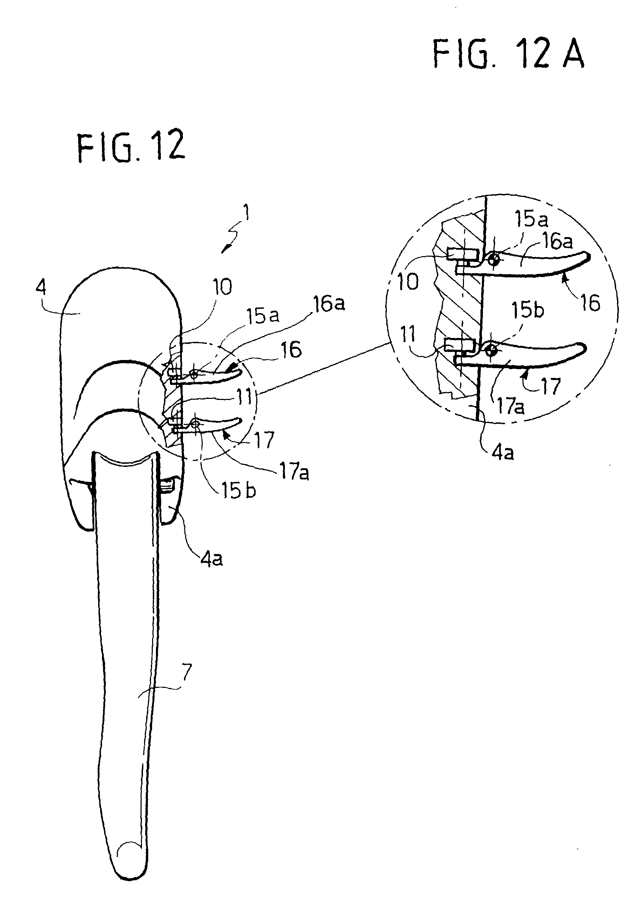

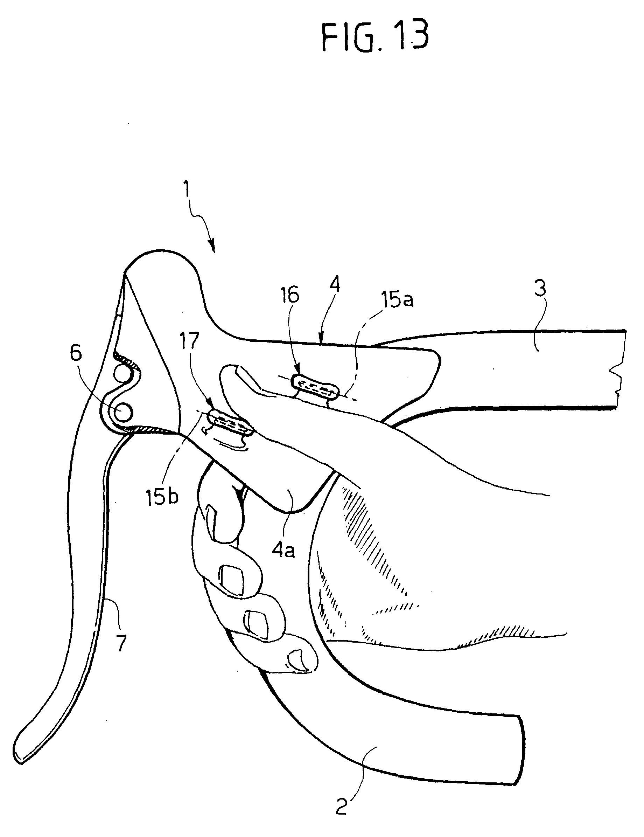

The embodiment illustrated in Figures 12 and 13 envisages two actuating arms 16a, 17a for the actuation of the two switches 10, 11, and the oscillation axes 15a, 15b are parallel to the internal side wall 4a. The keys 16, 17 are actuated in this case with a top-down movement and are easily controllable by the cyclist's thumb without the cyclist having to displace his hand substantially from its normal operating position. Figure 13 illustrates, in particular, how the cyclist may control each key 16, 17 in a convenient way with his thumb, when he grips the handlebar. In a variant (not represented), the keys 16, 17 could assume the configuration of Figure 13 and be actuated both by the cyclist's thumb in the position represented in Figure 13 by pushing the key 17 downwards and the key 16 upwards without substantially displacing the position of his thumb.

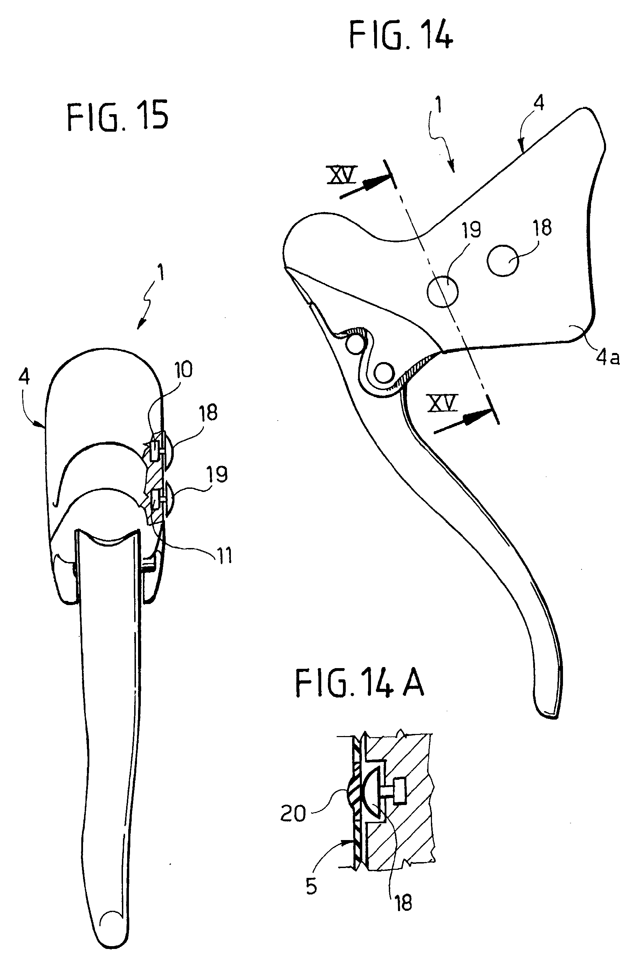

In the variant illustrated in Figures 14 and 15, the two electrical switches 10, 11 are controlled by two push-buttons 18, 19 arranged on the internal side wall 4a of the supporting body 4. The push-buttons 18, 19 are recalled elastically towards a neutral resting position by elastic means incorporated in the respective electrical switches 10, 11 or by auxiliary elastic means (not illustrated).

According to a further preferred characteristic, the protective sheath 5 made of elastomeric material covering the supporting body 4 envisages areas with decreased softness in a position corresponding to the two push-buttons 18, 19 so as to protect and impermeabilize the two switches 10, 11 and at the same time enable a good sensitivity to touch for the cyclist. Such a solution is shown in Figure 14A, which illustrates an insert 20 mounted in a corresponding opening obtained in the wall of the protective sheath 5, in a position corresponding to each of the two push-buttons 18, 19. The insert 20 may have a shaped and/or coloured outer surface that enables the cyclist to identify easily, even just by touch, the area of the push-button.

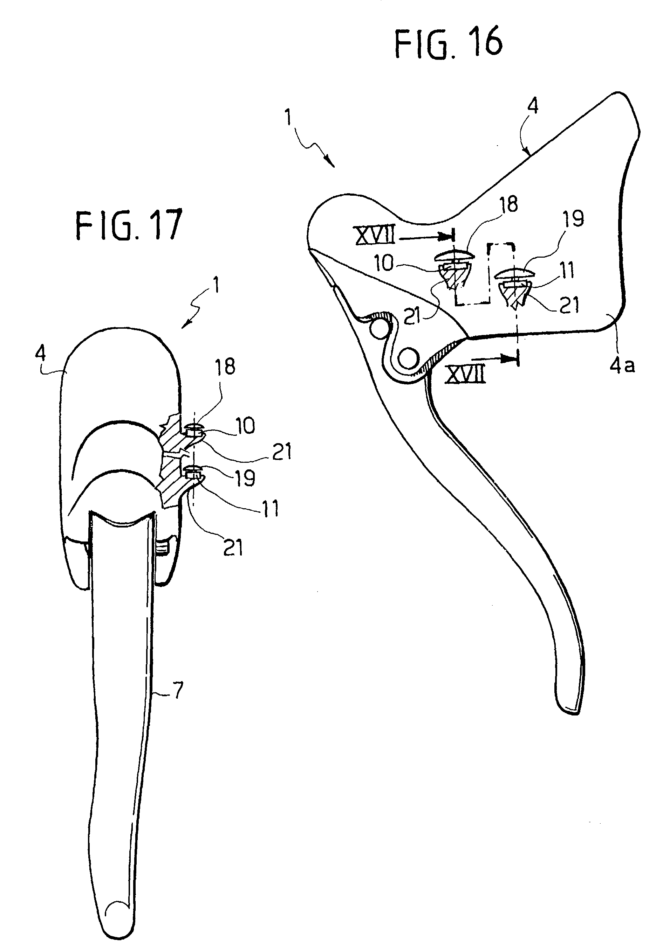

Finally, the solution represented in Figures 16 and 17 again illustrates two electrical switches 10, 11, controlled by means of push-buttons 18, 19. In this case, the switches are carried by two appendages 21 of the supporting body 4 so as to have an operating direction corresponding to the displacement of the cyclist's thumb in a substantially vertical direction.

Of course, without prejudice to the principle of the invention, the details of construction and the embodiments may vary widely with respect to what is described and illustrated herein purely by way of example, without thereby departing from the scope of the present invention.

## Claims

1. A control device (1) for a bicycle derailleur comprising a frame and an handlebar (3), the handlebar presenting a central part, connected to the frame, and two curved ends (2) which extend in planes that are substantially perpendicular to the central part of the handlebar, said device comprising:
- a supporting body (4), which can be fixed to said handlebar (3) and can be gripped by the cyclist and which has an internal side wall (4a) and an external side wall (4b) that are substantially parallel to the plane of a respective curved end of the handlebar;
- actuator means of said derailleur, which can be controlled in two opposite directions for controlling the derailleur towards either higher or lower gear ratios; and
- a first control member and a second control member, for activating said actuator means in said two opposite directions;
**characterized in that** said first and second control members (8, 9; 16, 17; 18, 19) are both arranged on said internal side wall (4a) of said supporting body (4) in a position that can be reached by the cyclist's thumb when his hand is in its normal operating position.

2. The device according to Claim 1, **characterized in that** said first and second control members (8, 9; 16, 17; 18, 19) are easily reachable by the cyclist's thumb without the cyclist substantially displacing his hand from its operating position.

3. The device according to Claim 1, **characterized in that** said first and second control members (8, 9; 16, 17; 18, 19) are easily reachable by the cyclist's thumb without the cyclist substantially displacing his hand from the supporting body.

4. The device according to Claim 1, **characterized in that** said first and second control members (8, 9; 16, 17; 18, 19) are easily reachable by the cyclist's thumb without the cyclist substantially displacing his hand from the handlebar.

5. The device according to Claim 1, **characterized in that** said derailleur is a front derailleur.

6. The device according to Claim 1, **characterized in that** said derailleur is a rear derailleur.

7. The device according to Claim 1, **characterized in that** said actuator means comprise electrical control means.

8. The device according to Claim 7, **characterized in that** said electrical control means comprise an electric motor which co-operates mechanically with said derailleur.

9. The device according to Claim 8, **characterized in that** said electric motor co-operates mechanically with said derailleur by means of an articulated-quadrilateral mechanism.

10. The device according to Claim 1, **characterized in that** said actuator means are of a mechanical type.

11. The device according to Claim 10, **characterized in that** said actuator means of a mechanical type are carried by said supporting body (4).

12. The device according to Claim 11, **characterized in that** said actuator means of a mechanical type comprise ratchet-mechanism means.

13. The device according to Claim 1, **characterized in that** said first and second control members are in the form of two actuating keys (8, 9; 16, 17) projecting from said internal side wall (4a) of said supporting body.

14. The device according to Claim 1, **characterized in that** said first and second control members are in the form of actuating push-buttons (18, 19).

15. The device according to Claim 14, **characterized in that** said actuating push-buttons (18, 19) are projecting from said internal side wall (4a).

16. The device according to Claim 1, **characterized in that** said first control member is in the form of an actuating key and said second control member is in the form of an actuating push-button.

17. The device according to Claim 1, **characterized in that** said first and second control members may be displaced between a resting position and an operating position.

18. The device according to Claim 17, **characterized in that** said first and second control members comprise means of recall towards said resting position.

19. The device according to Claim 18, **characterized in that** said means of recall comprise elastic means.

20. The device according to Claim 13, **characterized in that** said keys (8, 9; 16, 17) constitute the ends of actuating arms (8a, 9a; 16a, 17a) mounted on the supporting body in a direction chosen among: a substantially vertical direction, a substantially longitudinal direction, and a direction that is substantially inclined both with respect to the vertical direction and with respect to the longitudinal direction.

21. The device according to Claim 13, **characterized in that** said keys (8, 9; 16, 17) are aligned with respect to one another according to a direction chosen among: a substantially vertical direction, a substantially longitudinal direction, and a direction that is substantially inclined both with respect to the vertical direction and with respect to the longitudinal direction.

22. The device according to Claim 13, **characterized in that** said keys are arranged staggered with respect to one another in the axial direction of actuation of the cyclist's thumb.

23. The device according to Claim 20, **characterized in that** said actuating arms (8a, 9a) are slidably mounted on the supporting body.

24. The device according to Claim 20, **characterized in that** said actuating arms (8a, 9a; 16a, 17a) are mounted oscillating around two respective axes (15a, 15b).

25. The device according to Claim 24, **characterized in that** said axes (15a, 15b) are parallel to one another.

26. The device according to Claim 24, **characterized in that** said axes are skew.

27. The device according to Claim 20, **characterized in that** said actuating arms (16a, 17a) are mounted oscillating around one and the same common axis (15).

28. The device according to Claim 27, **characterized in that** said keys (16, 17) are positioned on opposite sides with respect to said common axis (15).

29. The device according to Claim 27, **characterized in that** said actuating arms (16a, 17a) constitute a single member (14) rocking around said common axis (15) .

30. The device according to Claims 20 and 7, **characterized in that** said actuating arms (8a, 9a; 16a, 17a) act on control switches (10, 11) of said electrical control means.

31. The device according to Claims 20 and 10, **characterized in that** said actuator means of a mechanical type comprise ratchet-mechanism means and **in that** said actuating arms co-operate directly with said ratchet-mechanism means.

32. The device according to Claim 14, **characterized in that** said push-buttons may be actuated by pressure of the cyclist's thumb by a movement in a direction substantially orthogonal to said internal side wall (4a).

33. The device according to Claim 15, **characterized in that** said push-buttons are mounted on appendages projecting from said side wall and actuatable by pressure of the cyclist's thumb by a movement in a direction substantially parallel to the plane of said internal side wall (4a).

34. The device according to Claim 15, **characterized in that** said push-buttons are mounted on appendages projecting from said side wall and actuatable by pressure of the cyclist's thumb by a movement in a direction chosen among: a substantially vertical direction, a substantially longitudinal direction, and a direction that is substantially inclined both with respect to the vertical direction and with respect to the longitudinal direction.

35. The device according to Claims 14 and 7, **characterized in that** said push-buttons (18, 19) act on control switches (10, 11) of said electrical control means.

36. The device according to Claim 1, **characterized in that** it comprises a covering sheath (5).

37. The device according to Claims 36 and 14, **characterized in that** said sheath presents areas (20) of interaction with said push-buttons (18, 19).

38. The device according to Claim 37, **characterized in that** said areas of interaction (20) present different softness with respect to the other areas that constitute said sheath (5).

39. The device according to Claim 37, **characterized in that** said areas of interaction (20) present the outer surface appropriately shaped to bestow a different sensation to the touch with respect to the other areas that constitute said sheath (5).

40. The device according to Claim 37, **characterized in that** said areas of interaction (20) present a different colour with respect to the other areas that constitute said sheath (5).

41. A control device according to any one of the previous claims, **characterized in that** said supporting body functions also as support for a lever (7) for the brake actuation, which can be reached by the cyclist's fingers in the same normal operating position of the cyclist's hand.
